# EUROPÄISCHE PATENTSCHRIFT

(11) **EP 3 712 557 B1**
(45) Veröffentlichungstag und Bekanntmachung des Hinweises auf die Patenterteilung: **08.09.2021**
(21) Anmeldenummer: 20163592.7
(22) Anmeldetag: 17.03.2020
(51) Int. Cl.: G01C 13/00, B63B 49/00, G01S 19/47, G01C 15/00, G01S 5/00, G01C 21/16, G01C 21/20, B63B 35/00, G01S 19/14

(54) **SYSTEM UND VERFAHREN ZUR STEUERUNG DER BEWEGUNG EINER VERMESSUNGSVORRICHTUNG**
SYSTEM AND METHOD FOR CONTROLLING THE MOTION OF A MEASURING DEVICE
SYSTÈME ET PROCÉDÉ DE COMMANDE DU MOUVEMENT D'UN DISPOSITIF DE MESURE

(30) Priorität: 22.03.2019 DE 102019107450
(43) Veröffentlichungstag der Anmeldung: 23.09.2020
(73) Patentinhaber: Hydromapper GmbH, 21079 Hamburg (DE)
(72) Erfinder: Hesse, Dr. Christian, 21614 Buxtehude (DE); Holste, Karsten, 27389 Lauenbrück (DE)
(74) Vertreter: Hauck Patentanwaltspartnerschaft mbB

(56) Entgegenhaltungen:
- DE-U1- 29 823 560
- JP-A- 2011 149 720
- US-A- 5 539 513

## Beschreibung

Die Erfindung betrifft ein System sowie ein Verfahren zur Steuerung der Bewegung einer Vermessungsvorrichtung. Die Vermessungsvorrichtung dient der Bauwerksinspektion, insbesondere der Untersuchung eines Bauwerks auf Schäden, bzw. der Bauwerkserfassung, also der grundsätzlichen Vermessung des Bauwerks. Bauwerksinspektionen werden für wassernahe Bauwerke, wie beispielsweise Spundwände, zumeist unter Wasser mit Tauchern durchgeführt, die Schäden an dem Bauwerk lediglich visuell aufnehmen und mit Zollstock oder Bandmaß vermessen. Auch über Wasser findet eine Schadensinspektion des Bauwerks in der Regel meist durch manuelle Sichtung statt.

Eine Vermessungsvorrichtung mit einem Schiff, welches eine Trägerplattform zieht, ist bekannt aus JP 2012-032273 A. Die Trägerplattform umfasst Sensoren zur Untersuchung einer Uferböschung sowohl unter wie auch über Wasser. Zudem verfügt die Trägerplattform über eine GPS-Antenne zur Positionsbestimmung der Trägerplattform.

DE 298 23 560 U1 betrifft eine Anordnung zur Vermessung von Gewässerprofilen, umfassend ein Boot mit einem Echolot und einem an Land befindlichen Tachymeter zur Zuordnung der Lage- und Höhenkoordinaten zu den über das Echolot ermittelten Punkten. In ähnlicher Weise funktioniert auch ein aus DE 295 05 930 U1 bekanntes vermessungstechnisches Gerät.

JP 2011-149720 A offenbart ein Vermessungssystem zur Bestimmung der Position eines bewegenden Messobjektes auf einem Boot mit Hilfe einer GPS-Antenne und eines an Land befindlichen Tachymeters.

Ausgehend von dem erläuterten Stand der Technik liegt der Erfindung die Aufgabe zugrunde, eine Vermessung mit höherer Positionsgenauigkeit zu ermöglichen.

Die Erfindung löst die Aufgabe durch ein System gemäß Anspruch 1 sowie durch ein Verfahren gemäß Anspruch 11. Vorteilhafte Ausgestaltungen sind Gegenstand der Unteransprüche, der Beschreibung sowie der Figuren.

Das erfindungsgemäße System besteht aus einer Vermessungsvorrichtung zur Bauwerksinspektion und Bauwerkserfassung und einem Tachymeter, wobei die Vermessungsvorrichtung eine schwimmfähige Trägerplattform umfasst, wobei die Trägerplattform mindestens einen Vermessungssensor zur Untersuchung eines wassernahen Bauwerks, eine inertiale Messeinheit sowie einen GNSS-Empfänger zum Empfang von GNSS-Signalen von Satelliten eines globalen Navigationssattelitensystems umfasst, wobei das Tachymeter an Land befindlich und auf die Trägerplattform der Vermessungsvorrichtung gerichtet ist, wobei das System weiterhin eine Steuereinheit umfasst, die dazu ausgebildet ist, auf Grundlage der Messdaten der inertialen Messeinheit, auf Grundlage der durch den GNSS-Empfänger empfangenen GNSS-Signale sowie auf Grundlage von durch das Tachymeter erfassten Messdaten eine aktuelle Position der Trägerplattform zu ermitteln und anhand des GNSS-Empfängers die Messdaten der inertialen Messeinheit, die Messdaten des Tachymeters und die GNSS-Signale zeitlich miteinander zu synchronisieren.

Das erfindungsgemäße Verfahren zur Steuerung der Bewegung einer Vermessungsvorrichtung zur Bauwerksinspektion und Bauwerkserfassung, wobei die Vermessungsvorrichtung eine schwimmfähige Trägerplattform umfasst, wobei die Trägerplattform mindestens einen Vermessungssensor zur Untersuchung eines wassernahen Bauwerks, eine inertiale Messeinheit sowie einen GNSS-Empfänger zum Empfang von GNSS-Signalen von Satelliten eines globalen Navigationssattelitensystems umfasst, weist die folgenden Schritte auf: Ermitteln einer aktuellen Position der Trägerplattform auf Grundlage von Messdaten der inertialen Messeinheit, auf Grundlage der durch den GNSS-Empfänger empfangenen GNSS-Signale sowie auf Grundlage der Messdaten eines an Land befindlichen, auf die Trägerplattform gerichteten Tachymeters, wenn der GNSS-Empfänger unzureichende GNSS-Signale empfängt, und zeitliche Synchronisation der Messdaten der inertialen Messeinheit, der Messdaten des Tachymeters und der GNSS-Signale anhand des GNSS-Empfängers.

Die Vermessungsvorrichtung kann zusätzlich zu der schwimmfähigen Trägerplattform eine separate Antriebseinheit, beispielsweise ein Boot, umfassen, welche die Trägerplattform hinter sich herzieht. Auch kann die Trägerplattform selbst über einen Antrieb verfügen und somit aktiv angetrieben sein. Die Trägerplattform kann insbesondere selbst ein Boot mit einem Antrieb sein. Die Trägerplattform verfügt über zumindest einen Vermessungssensor mit welchem ein wassernahes Bauwerk über Wasser und/oder unter Wasser untersucht, also inspiziert, bzw. erfasst werden kann. Das wassernahe Bauwerk kann insbesondere ein Hafenbauwerk sein, beispielsweise eine Spundwand. Über den mindestens einen Vermessungssensor kann das Bauwerk erfasst und es können an dem Bauwerk eventuell vorhandene Schäden identifiziert werden. Zur Vermessung des Bauwerks kann die Trägerplattform entlang einer vorbestimmten Trajektorie an dem Bauwerk entlanggeführt werden, beispielsweise in einem konstanten Abstand zu dem Bauwerk. Die exakte Kenntnis der jeweils aktuellen Position der Trägerplattform ist hierbei von großer Bedeutung. Zum einen kann nur so die Einhaltung der geplanten Trajektorie exakt eingehalten werden. Zum anderen erlaubt die exakte Kenntnis der jeweils aktuellen Position die über den mindestens einen Vermessungssensor ermittelten Objektdaten genau zu lokalisieren. Die Steuereinheit kann dies insbesondere in Echtzeit gewährleisten.

Die Trägerplattform umfasst zum einen eine inertiale Messeinheit zur Positionsbestimmung und insbesondere auch zur Bestimmung der räumlichen Ausrichtung der Trägerplattform. Eine solche inertiale Messeinheit wird auch als IMU ("inertial measurement unit") bezeichnet. Eine IMU ist an sich bekannt und verfügt über eine räumliche Kombination mehrerer Initialsensoren, beispielsweise Beschleunigungssensoren und Drehratensensoren. Mittels der IMU kann eine Bewegung der Trägerplattform erkannt werden. Dies berücksichtigt die Steuereinheit für die Ermittlung der aktuellen Position und der Trajektorie der Trägerplattform insbesondere in Zusammenwirkung mit den über den GNSS-Empfänger empfangenen Signalen. GNSS ist die Abkürzung für globales Navigationssatellitensystem. Über ein solches Satellitensystem, beispielsweise GPS, Galileo, GLONASS, BEIDOU oder QZSS, kann die Position der Trägerplattform dank des GNSS-Empfängers sehr genau bestimmt werden. Diese Positionsbestimmung kann in regelmäßigen Abständen oder kontinuierlich erfolgen. So kann eine Trajektorie der Trägerplattform bestimmt werden. Die Trajektorie bezeichnet den durch die Trägerplattform abgefahrenen Fahrweg, also die Positionsdaten der Trägerplattform über der Zeit. Gerade bei wassernahen Bauwerken sind jedoch erfahrungsgemäß immer wieder Unterbrechungen des GNSS-Empfangs oder eine eingeschränkte Datenqualität der GNSS-Signale zu verzeichnen. Dies wirkt sich zum einen negativ auf die Trajektorie aus. So kommt es häufig dazu, dass die IMU einen Drift erfährt, welcher nicht länger durch das GNSS stabilisiert werden kann. Dies hat zudem auch, wie erläutert, Auswirkungen auf die exakte Lokalisierung der Objektdaten, also beispielsweise der durch den mindestens einen Vermessungssensor identifizierten Schäden an dem Bauwerk.

Erfindungsgemäß ist daher vorgesehen zusätzlich zu der IMU und zu dem GNSS-Empfänger auch ein Tachymeter zur Positionsbestimmung der Trägerplattform zu verwenden. Das Tachymeter ist dabei auf die Trägerplattform der Vermessungsvorrichtung gerichtet und bestimmt in an sich bekannter Weise dessen Position im Raum. Beispielsweise ist das Tachymeter auf ein auf der Trägerplattform befestigtes Prisma gerichtet oder erfasst einen optisch eindeutig identifizierbaren Punkt mit Hilfe einer im Tachymeter vorhandenen Kamera. Auch kann das Tachymeter zur Bestimmung der Ausrichtung der Trägerplattform ausgebildet sein, wie später noch erläutert wird. Insbesondere verfolgt das Tachymeter die Trägerplattform bei ihrer Bewegung entlang der Trajektorie. Auch mittels dieser Positionsdaten kann die Trajektorie der Trägerplattform bestimmt werden. Bei dem an sich bekannten Verfahren zur Bestimmung der Position einer Trägerplattform mittels eines Tachymeters besteht jedoch das Problem, dass die Messdaten des Tachymeters nur im Nachhinein zeitlich mit den über den Vermessungssensor ermittelten Objektdaten des Bauwerks bzw. der Trajektorie der Trägerplattform verknüpft werden können. Zumeist erfolgt gar keine solche Verknüpfung. Hierfür bedarf es einer zeitlichen Synchronisation zwischen Plattform und Tachymeter, welche bekannte Systeme nicht bzw. nur bei absolutem Stillstand der Plattform gewährleisten können. Absoluter Stillstand ist bei einer schwimmenden Trägerplattform schon aufgrund des Wellengangs oder aufgrund von Windeinflüssen nicht zu erreichen.

Daher ist erfindungsgemäß weiter vorgesehen, die Messdaten des Tachymeters, der IMU und die GNSS-Signale anhand des GNSS-Empfängers miteinander zeitlich zu synchronisieren. Das System umfasst erfindungsgemäß eine Steuereinheit, die zur Positionsermittlung sowie zur zeitlichen Synchronisation ausgebildet ist. Beispielsweise kann die Steuereinheit am GNSS-Empfänger die GNSS-Signale, an der IMU deren Messdaten und vom Tachymeter dessen Messdaten abfragen und über den GNSS-Empfänger, insbesondere über eine Uhr des GNSS-Empfängers, zeitlich synchronisieren. Es kann also eine Uhr des GNSS-Empfängers zur zeitlichen Synchronisation der Daten dienen. Insbesondere können die durch den GNSS-Empfänger der Trägerplattform empfangenen GNSS-Signale Positionierungssignale der jeweiligen Satelliten sowie zumindest ein Zeitsignal umfassen, wobei die zeitliche Synchronisation anhand des Zeitsignals erfolgt. Die Steuereinheit kann also dazu ausgebildet sein, die zeitliche Synchronisation anhand des Zeitsignals durchzuführen. Auch hierunter wird eine zeitliche Synchronisation anhand des GNSS-Empfängers der Trägerplattform verstanden. Die zeitliche Synchronisation ermöglicht die Positionsermittlung der Trägerplattform in Echtzeit und erlaubt damit insbesondere das Steuern der Trägerplattform in Reaktion auf eventuelle Abweichungen von einer geplanten Trajektorie, wie später noch erläutert wird.

Durch die Kombination und Verknüpfung der IMU-Daten, der GNSS-Signale sowie der Messdaten des Tachymeters erlaubt das erfindungsgemäße System bzw. das erfindungsgemäße Verfahren eine besonders genaue Positionsbestimmung der Trägerplattform, insbesondere auch dann, wenn der GNSS-Empfänger keine GNSS-Signale empfängt, beispielsweise aufgrund einer Signalabschattung, oder nur GNSS-Signale unzureichender Qualität empfängt, beispielsweise von weniger als vier Satelliten. Das Tachymeter kann also insbesondere zur Auffüllung von Lücken in den Positionsdaten der durch die Trägerplattform abgefahrenen Trajektorie dienen, welche aufgrund der Abschattung des GNSS-Signals entstehen. Auch bei Unterbrechungen im Empfang der GNSS-Signale kann folglich eine exakte Trajektorie erstellt und werden insbesondere auch die Objektdaten mit exakten Positionsinformationen versehen werden. Die Positionsbestimmung erfolgt idealerweise anhand der Messdaten der IMU, der GNSS-Signale sowie der Messdaten des Tachymeters. Sollte das GNSS unzureichende Daten (schlechter GNSS Empfang) liefern, erfolgt die Positionsbestimmung anhand der GNSS-Signale mit herabgewichteter Genauigkeit für GNSS, anhand der Messdaten der IMU sowie anhand der Messdaten des Tachymeters. Sollten GNSS-Signale gar nicht empfangen werden, erfolgt die Positionsbestimmung nur anhand der Messdaten der IMU sowie den Messdaten des Tachymeters. Sollte kein Sichtkontakt zum Tachymeter bestehen erfolgt die Positionsbestimmung zumindest anhand der Messdaten der IMU sowie anhand der GNSS-Signale. Die zeitliche Synchronisation erlaubt ein exaktes Korrelieren der Messdaten des Tachymeters und der GNSS-Signale, also insbesondere eine zeitlich korrektes Auffüllen der Lücken in den Positionsdaten. Das System und das Verfahren werden im Folgenden gemeinsam erläutert. Das System ist zur Ausführung des Verfahrens geeignet, das Verfahren also durch das System ausführbar. Erläuterungen zu dem System gelten analog für das Verfahren und Erläuterungen zu dem Verfahren analog für das System.

Nach einer Ausgestaltung ist die Steuereinheit dazu ausgebildet, auf Grundlage der ermittelten Position der Trägerplattform einen Steuerbefehl für eine Antriebseinheit der Vermessungsvorrichtung zu erstellen zur Anpassung einer Trajektorie der Vermessungsvorrichtung. Entsprechend kann das Verfahren den Schritt umfassen: Anpassung einer Trajektorie der Vermessungsvorrichtung auf Grundlage der ermittelten Position der Trägerplattform. Nach dieser Ausgestaltung können Kursabweichungen der Trägerplattform von einer vorbestimmten Trajektorie ausgeglichen werden. Eine solche vorbestimmte Trajektorie, welche die Trägerplattform zwecks Untersuchung/Erfassung des Bauwerks abfahren soll, kann beispielsweise in der Steuereinheit hinterlegt sein. Wird eine Abweichung der abgefahrenen Trajektorie von der vorbestimmten Trajektorie durch die Steuereinheit festgestellt, kann die Steuereinheit über einen entsprechenden Steuerbefehl die Trajektorie korrigieren. Aufgrund der erfindungsgemäß exakten Ortsdaten kann auch bei unzureichenden oder vollständig abgeschatteten GNSS-Signalen die Einhaltung der geplanten Trajektorie sichergestellt werden. Diese Steuerung kann aufgrund der zeitlichen Synchronisation der Daten insbesondere in Echtzeit erfolgen.

Bei einer Ausgestaltung ist die Steuereinheit auf der Trägerplattform angeordnet und dazu ausgebildet, die Messdaten des Tachymeters unmittelbar oder über einen zentralen Server zu empfangen. Nach einer alternativen Ausgestaltung ist die Steuereinheit Teil eines zentralen Servers und dazu ausgebildet, die Messdaten des Tachymeters, der inertialen Messeinheit sowie die von dem GNSS-Empfänger aufgenommenen GNSS-Signale zu empfangen. Die Steuereinheit kann also entweder auf der Trägerplattform angeordnet sein oder als Teil eines zentralen Servers außerhalb der Trägerplattform, insbesondere unabhängig von der gesamten Vermessungsvorrichtung, angeordnet sein. Die Steuereinheit kann die Messdaten bei der IMU bzw. beim Tachymeter insbesondere aktiv abfragen. Auch kann die Steuereinheit die Daten des GNSS-Empfängers abfragen. Aus den ermittelten Daten bestimmt die Steuereinheit die aktuelle Position der Trägerplattform, insbesondere eine Trajektorie der Trägerplattform. Die Steuereinrichtung kann anschließend die ermittelten Positionsdaten mit den zum entsprechenden Zeitpunkt durch den mindestens einen Vermessungssensor ermittelten Objektdaten, also beispielsweise den Bauwerksschäden, verknüpfen. Zudem kann die Steuereinheit in der erläuterten Weise einen Steuerbefehl an die Vermessungsvorrichtung übermitteln für eine eventuelle Kurskorrektur.

Nach einer Ausgestaltung ist die Trägerplattform über eine auf oder an der Trägerplattform angeordnete Antriebseinheit aktiv angetrieben. Wie bereits erwähnt, kann die Vermessungsvorrichtung über ein Boot oder eine andere Antriebsvorrichtung verfügen, die die Trägerplattform zieht. Nach der vorliegenden Ausgestaltung jedoch wird die Trägerplattform nicht gezogen, sondern ist selbst aktiv angetrieben. Die Trägerplattform und damit die auf der Trägerplattform angeordnete Vermessungssensorik kann somit in unmittelbarer Weise exakt positioniert werden. Insbesondere die Einhaltung einer vorbestimmten Trajektorie ist somit zuverlässiger möglich.

Nach einer Ausgestaltung ist die Steuereinheit dazu ausgebildet, zur zeitlichen Synchronisation ein über einen mit dem Tachymeter verbundenen GNSS-Empfänger empfangenes Zeitsignal zu nutzen. Das Tachymeter kann hierfür einen zusätzlichen GNSS-Empfänger umfassen. Nach einer anderen Ausgestaltung ist die Steuereinheit dazu ausgebildet, zur zeitlichen Synchronisation die von dem Tachymeter empfangenen Messdaten beim Empfang mit einem Zeitstempel zu versehen. Das Verfahren kann folglich die zeitliche Synchronisation mittels eines über einen mit dem Tachymeter verbundenen GNSS-Empfänger empfangenes Zeitsignal umfassen. Auch kann das Verfahren die zeitliche Synchronisation durch Versehen der von dem Tachymeter empfangenen Messdaten beim Empfang durch die Steuereinheit mit einem Zeitstempel vorsehen. Wie bereits angesprochen, kann die zeitliche Synchronisation grundsätzlich anhand des GNSS-Empfängers der Trägerplattform beispielsweise über ein durch diesen empfangenes Zeitsignal erfolgen. Die Messdaten des Tachymeters können nach einer Ausgestaltung mit einem auf diesem Zeitsignal basierenden Zeitstempel versehen werden. Dieser Zeitstempel kennzeichnet dann den Zeitpunkt des Eingangs der Messdaten des Tachymeters an der Steuereinheit. Aufgrund beispielsweise des Übertragungswegs von dem Tachymeter zu der Steuereinheit ist diese Synchronisierung jedoch nicht unbedingt exakt. Daher kann nach der anderen Ausgestaltung auch das Tachymeter mit einem GNSS-Empfänger verbunden sind oder diesen aufweisen, der zumindest oder insbesondere nur das Zeitsignal der Satelliten des GNSS nutzt. Dann können die Messdaten des Tachymeters bereits direkt am Tachymeter mit einem Zeitstempel versehen werden. Anschließend können die Messdaten des Tachymeters mitsamt Zeitinformation an die Steuereinheit übermittelt werden. Diese Synchronisation ist umso genauer.

Nach einer Ausgestaltung ist die Steuereinheit dazu ausgebildet, den Drift der Sensoren der inertialen Messeinheit mittels der GNSS-Signale sowie der Messdaten des Tachymeters zu korrigieren. In an sich bekannter Weise kann der bei solchen IMU's auftretende Drift, also eine unerwünschte Abweichung der Sensoren der IMU, über die GNSS-Signale korrigiert werden. Bei dem erfindungsgemäßen System bzw. dem erfindungsgemäßen Verfahren kann zudem vorgesehen sein, den Drift der Sensoren der inertialen Messeinheit auch über die über das Tachymeter ermittelten Positionsdaten zu korrigieren. Die Steuereinheit kann entsprechend ausgebildet sein. Somit kann der Drift der IMU auch dann in zuverlässiger Weise korrigiert werden, wenn kein GNSS-Signal verfügbar ist.

Nach einer Ausgestaltung ist das Tachymeter auch zur Ermittlung der Ausrichtung der Trägerplattform ausgebildet ist, wie oben bereits angesprochen. Insbesondere kann das Tachymeter über eine Kamera verfügen, mit welcher die aktuelle Ausrichtung der Trägerplattform ermittelt werden kann. Durch Kenntnis der Ausrichtung kann eine geplante Trajektorie umso genauer eingehalten werden, wenn diese Ausrichtung bei den erläuterten Steuerbefehlen zur Steuerung der Trägerplattform berücksichtigt wird. Die Ausrichtung kann dabei insbesondere über die Daten der IMU sowie über die Tachymeterdaten ermittelt werden.

Nach einer Ausgestaltung ist der mindestens eine Vermessungssensor eine Kamera, insbesondere eine Thermalkamera oder Multispektralkamera, ein Laserscanner oder ein Echolot, insbesondere ein Fächerecholot, auch Multibeam genannt, ein 3D-Flächen- oder Zeilensensor. Sollten mehrere Vermessungssensoren vorgesehen sein, können diese eine beliebige Kombination der genannten Sensoren umfassen. Beispielsweise kann zur Untersuchung des Bauwerks unter Wasser ein Echolot und zur Untersuchung des Bauwerks über Wasser ein Laserscanner, beispielsweise ein Range-Imaging Sensor, vorgesehen sein. Zusätzlich oder alternativ kann eine Kamera das Bauwerk über Wasser oder unter Wasser oder insbesondere über Wasser sowie gleichzeitig unter Wasser untersuchen. Über Wasser kann insbesondere eine Aufnahme von siebendimensionalen Daten durch die Vermessungssensoren erfolgen, umfassend eine Farbaufnahme im RGB-Farbraum mittels der Kamera und zudem die Aufnahme dreier räumlicher Koordinaten X, Y und Z durch einen Laserscanner sowie auch die Rückstreuintensität des Lasers. Auch können zusätzlich die Messwerte eines Thermalsensors erfasst werden, also achtdimensionale Daten. Unter Wasser kann insbesondere die Auswertung von vierdimensionalen Daten erfolgen, nämlich die Aufnahme der räumlichen Koordinaten X, Y und Z sowie der Rückstreuintensität mittels eines Echolots.

Nach einer Ausgestaltung sind zumindest zwei Vermessungssensoren zur Untersuchung des wassernahen Bauwerks vorgesehen, wobei ein erster Vermessungssensor zur Untersuchung eines über dem Wasserspiegel liegenden Teils des Bauwerks ausgebildet ist und ein zweiter Vermessungssensor zur Untersuchung eines unter dem Wasserspiegel liegenden Teils des Bauwerks ausgebildet ist. Wie bereits erwähnt, kann somit also die Trägerplattform gleichzeitig über wie auch unter Wasser das Bauwerk vermessen. Beispielsweise kann für die Unterwasseruntersuchung ein Echolot und über Wasser eine Kamera und oder ein Laserscanner vorgesehen sein. Die gleichzeitige Untersuchung des Bauwerks unter Wasser wie auch über Wasser ist besonders effizient. Insbesondere muss eine vorbestimmte Trajektorie so im Idealfall nur einmal abgefahren werden.

Das erfindungsgemäße System ist zur Ausführung des erfindungsgemäßen Verfahrens geeignet. Das erfindungsgemäße Verfahren kann also mit dem erfindungsgemäßen System ausgeführt werden. Die zu dem System gemachten Erläuterungen gelten entsprechend auch für das Verfahren und die für das Verfahren gemachten Erläuterungen entsprechend auch für das System.

Eine Ausgestaltung der Erfindung wird im Folgenden anhand von Figuren erläutert. Es zeigen:
- Figur 1: eine erfindungsgemäße Vermessungsvorrichtung,
- Figur 2: erfindungsgemäßes System aus einer Vermessungsvorrichtung und einem Tachymeter.

Soweit nichts anderes angegeben ist, bezeichnen im Folgenden gleiche Bezugszeichen gleiche Gegenstände.

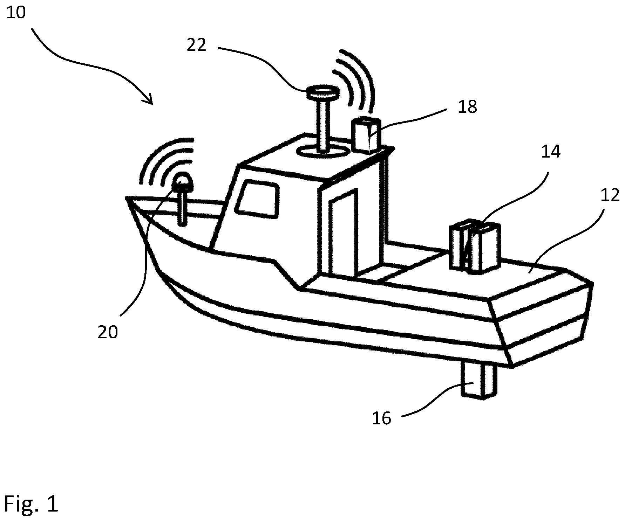

Figur 1 zeigt eine erfindungsgemäße Vermessungsvorrichtung 10 zur Bauwerksinspektion. Die Vermessungsvorrichtung 10 ist vorliegend in Form eines Boots ausgebildet und umfasst eine schwimmfähige Trägerplattform 12, einen Überwasserscanner 14, einen Unterwasserscanner 16, eine Kamera 18 sowie einen GNSS-Empfänger 20. Weiterhin ist ein Reflektor 22 auf der Trägerplattform 12 angeordnet. Die Vermessungsvorrichtung 10 verfügt zudem über einen an der Trägerplattform 12 angeordneten, nicht dargestellten Antrieb, mit welchem die Trägerplattform 12 aktiv angetrieben werden kann.

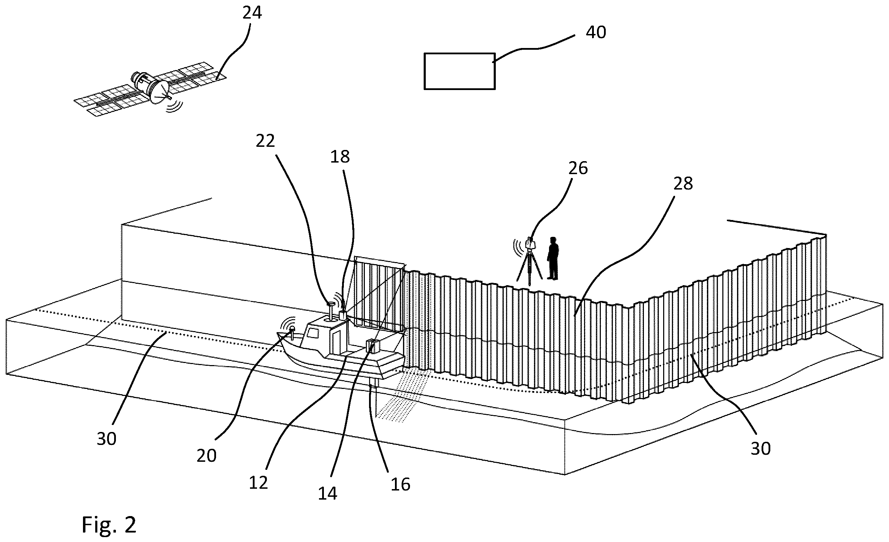

Figur 2 zeigt ein System umfassend die Vermessungsvorrichtung aus Figur 1 sowie umfassend ein Tachymeter 26. Das Tachymeter 26 steht an Land und ist auf die den Reflektor 22 der Trägerplattform 12 ausgerichtet. Anstatt über den Reflektor kann das Tachymeter auch durch eine Kamera mit Mustererkennungstechnologie eine oder mehrere Markierungen oder einen oder mehrere Körper an der Trägerplattform erkennen. Die Vermessungsvorrichtung bewegt sich entlang einer Trajektorie 30 um ein wassernahes Bauwerk 28, vorliegend eine Spundwand, und untersucht dieses mit ihren Vermessungssensoren 14, 16 und 18. Die bereits vermessene Fläche der Spundwand 28 ist durch dreidimensionale Struktur der Spundwand in Figur 2 ersichtlich. Die Sensoren 14, 16, 18 erfassen bei ihrer Vermessung Objektdaten der Spundwand, wie beispielsweise Schäden, in an sich bekannter Weise. So können die Sensoren 14, 16 beispielsweise Laserscanner sein, die aus den Signallaufzeiten sowie der Rückstreuintensität Informationen über das Relief der Spundwand als Objektdaten liefern können. Auch kann der Scanner 16 ein Echolot sein, welches entsprechende Daten liefert. Der Sensor 18 kann eine Kamera sein, welche Farbaufnahmen der Spundwand liefert. Die über die Sensoren 14 bis 18 ermittelten Objektdaten der Spundwand 28 werden über eine Steuereinheit 40 mit Positionsdaten der Trägerplattform 12 verknüpft.

Zur Bestimmung der Position der Trägerplattform 12 ist zum einen eine nicht dargestellte IMU der Trägerplattform 12, zum anderen der GNSS-Empfänger 20 vorgesehen, welcher in an sich bekannter Weise GNSS-Signale von Satelliten eines globalen Navigationssatellitensystems empfängt. Ein Satellit eines solchen Navigationssatellitensystems ist beispielhaft bei Bezugszeichen 24 dargestellt. Diese GNSS-Signale wie auch die Messdaten der IMU werden weitervermittelt an die Steuereinheit 40, welche im vorliegenden Ausführungsbeispiel als Teil eines zentralen Servers ausgebildet ist. Auf Grundlage dieser GNSS-Signale ermittelt die Steuereinheit 40 in regelmäßigen Abständen die aktuelle Position der Trägerplattform 12. Weiterhin erhält die Steuereinrichtung auch die Messdaten des Tachymeters 26 und legt diese ebenfalls der Ermittlung der aktuellen Position der Trägerplattform 12 zugrunde. Die Steuereinheit 40 kann über ein kabelloses Netzwerk auch mit den Sensoren 12, 14, 16, 18 kommunizieren. Die Steuereinheit kann alternativ auch auf der Vermessungsvorrichtung 10, insbesondere der Trägerplattform 12 angeordnet sein.

Die Methode der Positionsermittlung über das Tachymeter kommt insbesondere dann zum Einsatz, wenn das GNSS-Signal nicht zur Verfügung steht, beispielsweise aufgrund einer Abschattung, oder von schlechter Qualität ist, beispielsweise wenn nur die Daten von weniger als vier Satelliten empfangen werden. Durch die erfindungsgemäße Positionsbestimmung der Trägerplattform nicht nur mittels IMU und des GNSS sondern auch mittels des Tachymeters kann unterbrechungsfrei mit hoher Genauigkeit die tatsächlich durch die Vermessungsvorrichtung abgefahrene Trajektorie ermittelt werden. Somit kann zum einen durch entsprechendes Nachsteuern die Einhaltung einer geplanten Trajektorie 30 sichergestellt werden. Zum anderen können die durch die Vermessungssensoren 14, 16, 18 aufgenommenen Objektdaten zu jedem Zeitpunkt genau mit einer räumlichen Position verknüpft und somit exakt lokalisiert werden. Dies ist insbesondere hilfreich zum späteren Wiederfinden und Überarbeiten der Schäden. Erfindungsgemäß erfolgt eine Synchronisation der Messdaten der IMU, der Messdaten des Tachymeters und der GNSS-Signale anhand des GNSS-Empfängers, was die Lokalisierung verbessert und insbesondere auch ein Steuern der Trägerplattform zwecks Einhaltung der vorgesehenen Trajektorie in Echtzeit erlaubt.

### Bezugszeichenliste

- 10: Vermessungsvorrichtung
- 12: Trägerplattform
- 14: Überwasserscanner
- 16: Unterwasserscanner/Echolot
- 18: Kamera
- 20: GNSS-Empfänger
- 22: Reflektor
- 24: Navigationssatellitensystem
- 26: Tachymeter
- 28: wassernahes Bauwerk/Spundwand
- 30: Trajektorie
- 40: Steuereinheit

## Patentansprüche

1. System aus einer Vermessungsvorrichtung (10) zur Bauwerksinspektion und Bauwerkserfassung und einem Tachymeter (26), wobei die Vermessungsvorrichtung (10) eine schwimmfähige Trägerplattform (12) umfasst, wobei die Trägerplattform (12) mindestens einen Vermessungssensor (14, 16, 18) zur Untersuchung eines wassernahen Bauwerks (28), eine inertiale Messeinheit sowie einen GNSS-Empfänger (20) zum Empfang von GNSS-Signalen von Satelliten (24) eines globalen Navigationssattelitensystems umfasst, wobei das Tachymeter (26) an Land befindlich und auf die Trägerplattform (12) der Vermessungsvorrichtung (10) gerichtet ist, wobei das System weiterhin eine Steuereinheit (40) umfasst, die dazu ausgebildet ist, auf Grundlage von Messdaten der inertialen Messeinheit, auf Grundlage der durch den GNSS-Empfänger (20) empfangenen GNSS-Signale sowie auf Grundlage von durch das Tachymeter (26) erfassten Messdaten eine aktuelle Position der Trägerplattform (12) zu ermitteln und anhand des GNSS-Empfängers (20) die Messdaten der inertialen Messeinheit, die Messdaten des Tachymeters (26) und die GNSS-Signale zeitlich miteinander zu synchronisieren.

2. System nach Anspruch 1, **dadurch gekennzeichnet, dass** die Steuereinheit (40) dazu ausgebildet ist, auf Grundlage der ermittelten Position der Trägerplattform (12) einen Steuerbefehl, insbesondere in Echtzeit, für eine Antriebseinheit der Vermessungsvorrichtung (10) zu erstellen zur Anpassung einer Trajektorie der Vermessungsvorrichtung (10).

3. System nach Anspruch 1 oder 2, **dadurch gekennzeichnet, dass** die Steuereinheit (40) auf der Trägerplattform (12) angeordnet und dazu ausgebildet ist, die Messdaten des Tachymeters (26) unmittelbar oder über einen zentralen Server zu empfangen.

4. System nach Anspruch 1 oder 2, **dadurch gekennzeichnet, dass** die Steuereinheit (40) Teil eines zentralen Servers ist und dazu ausgebildet ist, die Messdaten des Tachymeters (26), der inertialen Messeinheit sowie die GNSS-Signale zu empfangen.

5. System nach Anspruch 2 und 4, **dadurch gekennzeichnet, dass** die Steuereinheit (40) weiterhin dazu ausgebildet ist, den Steuerbefehl an die Trägerplattform (12) zu senden.

6. System nach einem der vorhergehenden Ansprüche, **dadurch gekennzeichnet, dass** die Trägerplattform (12) über eine auf oder an der Trägerplattform (12) angeordnete Antriebseinheit aktiv angetrieben ist.

7. System nach einem der vorhergehenden Ansprüche, **dadurch gekennzeichnet, dass** die Steuereinheit (40) dazu ausgebildet ist, zur zeitlichen Synchronisation ein über den GNSS-Empfänger des Tachymeters (26) empfangenes Zeitsignal zu nutzen.

8. System nach einem der vorhergehenden Ansprüche, **dadurch gekennzeichnet, dass** die Steuereinheit (40) dazu ausgebildet ist, zur zeitlichen Synchronisation die von dem Tachymeter (26) empfangenen Messdaten beim Empfang mit einem Zeitstempel zu versehen.

9. System nach einem der vorhergehenden Ansprüche, **dadurch gekennzeichnet, dass** die Steuereinheit (40) dazu ausgebildet ist, den Drift der Sensoren der inertialen Messeinheit mittels der GNSS-Signale sowie der Messdaten des Tachymeters (26) zu korrigieren.

10. System nach einem der vorhergehenden Ansprüche, **dadurch gekennzeichnet, dass** das Tachymeter (26) auch zur Ermittlung der Ausrichtung der Trägerplattform (12) ausgebildet ist, insbesondere über eine Kamera.

11. System nach einem der vorhergehenden Ansprüche, **dadurch gekennzeichnet, dass** als Vermessungssensoren (14, 16, 18) einer oder mehrere der folgenden vorgesehen sind: eine Kamera, insbesondere eine Thermalkamera oder Multispektralkamera, ein Laserscanner, ein Echolot, insbesondere ein Fächerecholot, ein 3D-Flächen- oder Zeilensensor.

12. System nach einem der vorhergehenden Ansprüche, **dadurch gekennzeichnet, dass** zumindest zwei Vermessungssensoren (14, 16) zur Untersuchung des wassernahen Bauwerks (28) vorgesehen sind, wobei ein erster Vermessungssensor (14) zur Untersuchung eines über dem Wasserspiegel liegenden Teils des Bauwerks (28) ausgebildet ist und ein zweiter Vermessungssensor (16) zur Untersuchung eines unter dem Wasserspiegel liegenden Teils des Bauwerks (28) ausgebildet ist.

13. Verfahren zur Steuerung der Bewegung einer Vermessungsvorrichtung (10) zur Bauwerksinspektion und Bauwerkserfassung, wobei die Vermessungsvorrichtung (10) eine schwimmfähige Trägerplattform (12) umfasst, wobei die Trägerplattform (12) mindestens einen Vermessungssensor (14, 16, 18) zur Untersuchung eines wassernahen Bauwerks (28), eine inertiale Messeinheit sowie einen GNSS-Empfänger (20) zum Empfang von GNSS-Signalen von Satelliten (24) eines globalen Navigationssattelitensystems umfasst, mit den Schritten: Ermitteln einer aktuellen Position der Trägerplattform (12) auf Grundlage von Messdaten der inertialen Messeinheit, auf Grundlage der durch den GNSS-Empfänger (20) empfangenen GNSS-Signale sowie auf Grundlage der Messdaten eines an Land befindlichen, auf die Trägerplattform (12) gerichteten Tachymeters (26), wenn der GNSS-Empfänger (20) unzureichende GNSS-Signale empfängt, und zeitliche Synchronisation der Messdaten der inertialen Messeinheit, der Messdaten des Tachymeters (26) und der GNSS-Signale miteinander anhand des GNSS-Empfängers (20).

14. Verfahren nach Anspruch 13, **gekennzeichnet durch** Anpassen einer Trajektorie der Vermessungsvorrichtung (10) auf Grundlage der ermittelten Position der Trägerplattform (12).

## Claims

1. A system consisting of a measuring device (10) for inspecting and recording constructions as well as a tachymeter (26), wherein the measuring device (10) comprises a floatable support platform (12), wherein the support platform (12) comprises at least one measuring sensor (14, 16, 18) for examining a construction (28) close to water, an inertial measuring unit, and a GNSS receiver (20) for receiving GNSS signals from satellites (24) of a global navigation satellite system, wherein the tachymeter (26) is located on land and is directed at the support platform (12) of the measuring device (10), wherein the system further comprises a control unit (40) that is designed to determine a current position of the support platform (12) based on measurement data of the inertial measuring unit, based on the GNSS signals received by the GNSS receiver (20), and based on measurement data recorded by the tachymeter (26), and to temporally synchronize the measurement data of the inertial measuring unit, the measurement data of the tachymeter (26), and the GNSS signals with one another with the aid of the GNSS receiver (20).

2. The system according to claim 1, **characterized in that** the control unit (40) is designed to generate a control command, in particular in real time, for a drive unit of the measuring device (10) based on the determined position of the support platform (12) in order to alter a trajectory of the measuring device (10).

3. The system according to claim 1 or 2, **characterized in that** the control unit (40) is arranged on the support platform (12) and is designed to receive the measurement data of the tachymeter (26) directly or via a central server.

4. The system according to claim 1 or 2, **characterized in that** the control unit (40) is part of a central server and is designed to receive the measurement data of the tachymeter (26) and of the inertial measuring unit as well as the GNSS signals.

5. The system according to claim 2 and 4, **characterized in that** the control unit (40) is further designed to send the control command to the support platform (12).

6. The system according to any one of the preceding claims, **characterized in that** the support platform (12) is actively driven by means of a drive unit arranged on top of or on the side of the support platform (12).

7. The system according to any one of the preceding claims, **characterized in that** the control unit (40) is designed to use a time signal received via the GNSS receiver of the tachymeter (26) for the temporal synchronization.

8. The system according to any one of the preceding claims, **characterized in that** the control unit (40) is designed to provide the measurement data received from the tachymeter (26) with a time stamp upon receipt for the temporal synchronization.

9. The system according to any one of the preceding claims, **characterized in that** the control unit (40) is designed to correct the drift of the sensors of the inertial measuring unit by means of the GNSS signals and the measurement data of the tachymeter (26).

10. The system according to any one of the preceding claims, **characterized in that** the tachymeter (26) is also designed to determine the orientation of the support platform (12), in particular by means of a camera.

11. The system according to any one of the preceding claims, **characterized in that** one or more of the following are provided as the measuring sensors (14, 16, 18): a camera, in particular a thermal camera or multispectral camera, a laser scanner, an echosounder, in particular a multibeam echosounder, a 3D area or line sensor.

12. The system according to any one of the preceding claims, **characterized in that** at least two measuring sensors (14, 16) are provided for examining the construction (28) close to water, wherein a first measuring sensor (14) is designed to examine a part of the construction (28) that is above the water level and a second measuring sensor (16) is designed to examine a part of the construction (28) that is below the water level.

13. A method for controlling the movement of a measuring device (10) for inspecting and recording constructions, wherein the measuring device (10) comprises a floatable support platform (12), wherein the support platform (12) comprises at least one measuring sensor (14, 16, 18) for examining a construction (28) close to water, an inertial measuring unit, and a GNSS receiver (20) for receiving GNSS signals from satellites (24) of a global navigation satellite system, said method comprising the steps of: determining, when the GNSS receiver (20) receives inadequate GNSS signals, a current position of the support platform (12) based on measurement data of the inertial measuring unit, based on the GNSS signals received by the GNSS receiver (20), and based on the measurement data of a tachymeter (26) that is located on land and directed at the support platform (12), and temporally synchronizing the measurement data of the inertial measuring unit, the measurement data of the tachymeter (26), and the GNSS signals with one another with the aid of the GNSS receiver (20).

14. The method according to claim 13, **characterized by** altering a trajectory of the measuring device (10) based on the determined position of the support platform (12).

## Revendications

1. Système comprenant un dispositif de mesure (10) destiné à l'inspection de constructions et à la détection de constructions ainsi qu'un tachymètre (26), dans lequel le dispositif de mesure (10) comporte une plateforme de support (12) capable de flotter, dans lequel la plateforme de support (12) comporte au moins un capteur de mesure (14, 16, 18) destiné à l'examen d'une construction proche de l'eau (28), une unité de mesure inertielle ainsi qu'un récepteur GNSS (20) destiné à la réception de signaux GNSS de satellites (24) d'un système global de navigation par satellite, dans lequel le tachymètre (26) est situé à terre et orienté vers la plateforme de support (12) du dispositif de mesure (10), dans lequel le système comporte en outre une unité de commande (40) conçue pour déterminer une position actuelle de la plateforme de support (12) sur la base de données de mesure de l'unité de mesure inertielle, sur la base des signaux GNSS reçus par le récepteur GNSS (20) ainsi que sur la base de données de mesure détectées par le tachymètre (26), et pour synchroniser les données de mesure de l'unité de mesure inertielle, les données de mesure du tachymètre (26) et les signaux GNSS entre eux dans le temps à l'aide du récepteur GNSS (20).

2. Système selon la revendication 1, **caractérisé en ce que** l'unité de commande (40) est conçue pour établir un ordre de commande sur la base de la position déterminée de la plateforme de support (12), en particulier en temps réel, pour une unité d'entraînement du dispositif de mesure (10), en vue de l'adaptation d'une trajectoire du dispositif de mesure (10).

3. Système selon la revendication 1 ou 2, **caractérisé en ce que** l'unité de commande (40) est disposée sur la plateforme de support (12) et conçue pour recevoir les données de mesure du tachymètre (26) directement ou par le biais d'un serveur central.

4. Système selon la revendication 1 ou 2, **caractérisé en ce que** l'unité de commande (40) fait partie d'un serveur central et est conçue pour recevoir les données de mesure du tachymètre (26), de l'unité de mesure inertielle ainsi que les signaux GNSS.

5. Système selon les revendications 2 et 4, **caractérisé en ce que** l'unité de commande (40) est en outre conçue pour envoyer l'ordre de commande à la plateforme de support (12).

6. Système selon l'une des revendications précédentes, **caractérisé en ce que** la plateforme de support (12) est entraînée de façon active par une unité d'entraînement disposée sur la plateforme de support (12) ou au niveau de celle-ci.

7. Système selon l'une des revendications précédentes, **caractérisé en ce que** pour la synchronisation dans le temps, l'unité de commande (40) est conçue pour utiliser un signal temporel reçu par le biais du récepteur GNSS du tachymètre (26).

8. Système selon l'une des revendications précédentes, **caractérisé en ce que** pour la synchronisation dans le temps, l'unité de commande (40) est conçue pour pourvoir les données de mesure reçues depuis le tachymètre (26) avec un horodatage lors de la réception.

9. Système selon l'une des revendications précédentes, **caractérisé en ce que** l'unité de commande (40) est conçue pour corriger la dérive des capteurs de l'unité de mesure inertielle au moyen des signaux GNSS ainsi que des données de mesure du tachymètre (26).

10. Système selon l'une des revendications précédentes, **caractérisé en ce que** le tachymètre (26) est également conçu pour déterminer l'orientation de la plateforme de support (12), en particulier par le biais d'une caméra.

11. Système selon l'une des revendications précédentes, **caractérisé en ce que** les capteurs de mesure (14, 16, 18) utilisés sont l'un ou plusieurs parmi les suivants : une caméra, en particulier une caméra thermique ou une caméra multispectrale, un scanner laser, un sonar, en particulier un sonar multifaisceaux, un capteur surfacique ou linéaire 3D.

12. Système selon l'une des revendications précédentes, **caractérisé en ce qu'**il est prévu au moins deux capteurs de mesure (14, 16) pour l'examen d'une construction proche de l'eau (28), dans lequel un premier capteur de mesure (14) est configuré pour examiner une partie de la construction (28) située au-dessus du niveau de l'eau et un deuxième capteur de mesure (16) est configuré pour examiner une partie de construction (28) située sous le niveau de l'eau.

13. Procédé de commande du mouvement d'un dispositif de mesure (10) destiné à l'inspection de constructions et à la détection de constructions, dans lequel le dispositif de mesure (10) comporte une plateforme de support (12) capable de flotter, dans lequel la plateforme de support (12) comporte au moins un capteur de mesure (14, 16, 18) destiné à l'examen d'une construction proche de l'eau (28), une unité de mesure inertielle ainsi qu'un récepteur GNSS (20) destiné à la réception de signaux GNSS de satellites (24) d'un système global de navigation par satellite, avec les étapes suivantes : détermination d'une position actuelle de la plateforme de support (12) sur la base de données de mesure de l'unité de mesure inertielle, sur la base des signaux GNSS reçus par le récepteur GNSS (20) ainsi que sur la base des données de mesure d'un tachymètre (26) situé à terre et orienté vers la plateforme de support (12), lorsque le récepteur GNSS (20) reçoit des signaux GNSS insuffisants, et synchronisation des données de mesure de l'unité de mesure inertielle, des données de mesure du tachymètre (26) et des signaux GNSS entre eux dans le temps à l'aide du récepteur GNSS (20).

14. Procédé selon la revendication 13, **caractérisé par** l'adaptation d'une trajectoire du dispositif de mesure (10) sur la base de la position déterminée de la plateforme de support (12).
